# EUROPEAN PATENT APPLICATION

(11) **EP 4 667 542 A1**
(43) Date of publication of application: **24.12.2025**
(21) Application number: 23949035.2
(22) Date of filing: 02.11.2023
(51) Int. Cl.: C09D 133/02, C09D 133/06, C09D 133/18, C09D 133/24, C08F 220/06, C08F 220/18, C08F 220/44, C08F 220/56

(54) **AQUEOUS COATING COMPOSITION, AQUEOUS POLE PIECE, AND AQUEOUS BATTERY**

(30) Priority: 14.08.2023 CN 202311021430
(71) Applicant: Contemporary Amperex Technology Co., Limited, Ningde, Fujian 352100 (CN)
(72) Inventor: CHENG, Cong, Ningde, Fujian 352100 (CN); YANG, Bingzi, Ningde, Fujian 352100 (CN); SUN, Xucong, Ningde, Fujian 352100 (CN); WANG, Xinghui, Ningde, Fujian 352100 (CN); SHI, Weijia, Ningde, Fujian 352100 (CN)
(74) Representative: Ziebig Hengelhaupt Intellectual Property Attorneys Patentanwaltskanzlei PartGmbB
(86) International application number: PCT/CN2023/129430
(87) International publication number: WO 2025/035616

(57) **Abstract**

Provided are an aqueous coating composition, an aqueous pole piece, and an aqueous battery. The aqueous coating composition includes an aqueous binder and a solvent, the aqueous binder includes a first polymer, and the first polymer includes a structural unit represented by formula (1) and a structural unit represented by formula (2); in formula (1), R₁, R₂ and R₃ are each independently hydrogen, a halogen, an alkyl, a hydroxyalkyl, an alkoxylate, a cycloalkyl, an alkenyl, an alkynyl, a heterocycloalkyl, an aryl, a heteroaryl, a hydroxyl, a cyano group or a nitro group, and L is a connecting bond or a C1-10 alkylene group; in formula (2), R₄, R₅ and R₆ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and n = 2-12. The aqueous coating composition can improve the adhesion and water resistance of an aqueous coating, thereby improving the safety performance and cycle performance of an aqueous battery.

## Description

### CROSS-REFERENCE TO RELATED APPLICATIONS

The present application is based on and claims priority to Chinese Patent Application No. 202311021430.7, filed on August 14, 2023, the entire disclosure of which is incorporated herein by reference.

### TECHNICAL FIELD

The present application relates to the technical field of batteries, and in particular to an aqueous coating composition, an aqueous pole piece and an aqueous battery.

### BACKGROUND

In recent years, as the application range of secondary batteries becomes wider, the secondary batteries are widely used in various fields such as energy storage power systems of hydraulic power stations, thermal power stations, wind power stations, and solar power stations, as well as power tools, electric bicycles, electric motorcycles, electric vehicles, military equipment, and aerospace. Due to the great development of the secondary batteries, higher requirements are also put forward for their performance.

Currently, aqueous batteries have been extensively concerned due to their environmentally friendly and pollution-free characteristics. There is a relatively high requirement for the water resistance of the aqueous pole piece of the aqueous battery. Hence, how to make the aqueous pole piece have excellent water resistance and improve the safety and cycle performance of the aqueous battery have become the urgent problems to be solved in the art.

### SUMMARY

The present application has been made in view of the above subject. The present invention is aimed at providing an aqueous coating composition, an aqueous pole piece, and an aqueous battery, which thus improves the adhesion and water resistance of the aqueous pole piece, reduces the risk of falling off of the aqueous coating layer, thereby further improving the safety performance and cycle performance of the aqueous battery.

In order to achieve the above object, a first aspect of the present application provides an aqueous coating composition including an aqueous binder and a solvent; the aqueous binder includes a first polymer, and the first polymer includes a structural unit represented by formula (1) and a structural unit represented by formula (2).

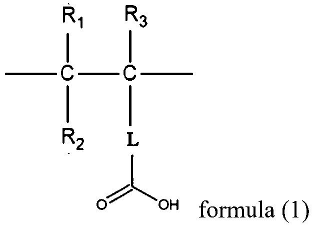

In the formula (1), R₁, R₂ and R₃ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and L is a connecting bond or a C1-10 alkylene group.

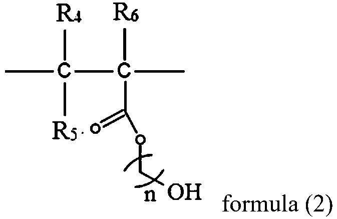

In the formula (2), R₄, R₅ and R₆ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and n = 2 to 12.

In the aqueous coating composition of the present application, the carboxyl group in the structural unit represented by formula (1) and the hydroxyl group in the structural unit represented by formula (2) may form a hydrogen bond and/or a crosslinked structure, which thus may improve the adhesion thereof in the aqueous pole piece such that the aqueous pole piece achieves excellent water resistance, the risk of film removal is reduced, and the safety and cycle performance of the battery are improved.

In any embodiment, in formula (1), R₁, R₂, and R₃ are each independently hydrogen, an alkyl, a hydroxyalkyl, an alkoxy, a hydroxyl, or a cyano group; L is a connecting bond or a C3-4 alkylene group; and in formula (2), R₄, R₅, and R₆ are each independently hydrogen, an alkyl, a hydroxyalkyl, an alkoxy, a hydroxyl, or a cyano group, and n = 3 to 6. The structural units represented by the formula (1) and the formula (2) are configured to contain the above functional groups such that the adhesion between the aqueous coating and the current collector may be improved. Moreover, as the battery is used, the improvement of the adhesion is advantageous for further improving the cycle performance.

In any embodiment, in the first polymer, a mass ratio of the structural unit represented by the formula (1) is 10% to 75%, and a mass ratio of the structural unit represented by the formula (2) is 5% to 40%. A crosslinked high-density network structure may be formed when the content of each structural unit is within the above range.

In any embodiment, the first polymer further contains a structural unit represented by formula (3) and/or a structural unit represented by formula (4):

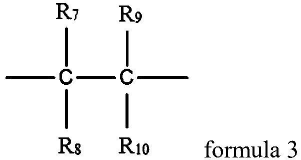

In the formula (3), R₇, R₈ and R₉ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group;

R₁₀ is a rigid group, optionally a cyano group, an amido or an aryl, optionally a cyano group.

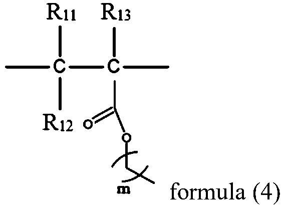

In the formula (4), R₁₁, R₁₂ and R₁₃ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and m = 2 to 12.

The structural unit represented by formula (3) is a hard segment to provide strength for materials. The structural unit represented by formula (4) is a soft segment to provide flexibility for materials, thereby enhancing the infiltration and spreading of the aqueous coating on a substrate, especially an oil-containing substrate (for example, the oil-containing aluminum foil), which is beneficial to improve the adhesion and water resistance.

In any embodiment, in the first polymer, a mass ratio of the structural unit represented by the formula (3) is 5% to 40%. In any embodiment, in the first polymer, a mass ratio of the structural unit represented by the formula (4) is 10% to 75%. Hence, such a configuration may enable the aqueous coating to have appropriate hardness and flexibility, which is advantageous for improving the adhesion and water resistance of the aqueous coating.

In any embodiment, in the first polymer, the mass ratio of the structural unit represented by the formula (1) is 30% to 55%; the mass ratio of the structural unit represented by the formula (2) is 5% to 15%; the mass ratio of the structural unit represented by the formula (3) is 10% to 20%, and the mass ratio of the structural unit represented by the formula (4) is 30% to 55%. The content of each structural unit is within the above range, which is advantageous for improving the adhesion and the water resistance.

In any embodiment, the first polymer has a number-average molecular weight of 200,000 to 1,000,000, optionally 300,000 to 600,000. The number-average molecular weight is configured within the above range such that the molecular chain of the binder may achieve partial entanglement effect in the aqueous coating, which is advantageous for the formation of a three-dimensional network structure in the aqueous coating, thereby improving the adhesion. Meanwhile, when the number-average molecular weight is within the above range, the aforesaid entanglement effect may be controlled within an appropriate range, thereby achieving excellent flexibility.

In any embodiment, the aqueous binder further includes a second polymer that is different from the first polymer and includes a group capable of reacting with the first polymer, and the group is capable of forming a hydrogen bond and/or a cross-linked structure with the first polymer. A crosslinked high-density three-dimensional network structure may be formed by further including the second polymer to form a hydrogen bond and/or a crosslinked structure with the first polymer, thereby improving the adhesion and water resistance of the aqueous coating.

In any embodiment, the second polymer includes a flexible group; the flexible group is a group containing an ester bond or a group containing an ether bond. The polymer contains a flexible group such that the flexibility of the binder may be enhanced, the brittleness of the coating may be improved, and the water resistance of the aqueous coating may be advantageously improved.

In any embodiment, the second polymer contains a structural unit represented by formula (5), a structural unit represented by formula (6), and a structural unit represented by formula (7).

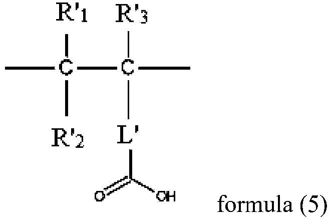

In the formula (5), R'₁, R'₂ and R'₃ are the same as or different from R₁, R₂ and R₃, respectively, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro froup; and L' is the same as or different from L and is a connecting bond or a C1-10 alkylene group.

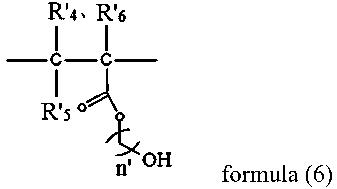

In the formula (6), R'₄, R'₅ and R'₆ are the same as or different from R₄, R₅ and R₆, respectively, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, n' is the same as or different from n, and n' = 2 to 12.

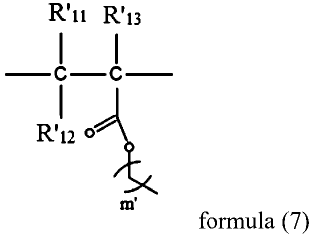

In the formula (7), R'₁₁, R'₁₂, and R'₁₃ are the same as or different from R₁₁, R₁₂, and R₁₃, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group, or a nitro group, m' is the same as or different from m, and m' = 2 to 12.

The carboxyl group of the structural unit represented by formula (5) and/or the hydroxyl group of the structural unit represented by formula (6) in the second polymer may form a hydrogen bond and/or a crosslinked structure with the carboxyl group of the structural unit represented by formula (1) and/or the hydroxyl group of the structural unit represented by formula (2) in the first polymer, so as to form a crosslinked high-density three-dimensional network structure, which is beneficial to improve the adhesion and water resistance of the aqueous coating.

In any embodiment, in formula (5), R'₁, R'₂, and R'₃ are each independently hydrogen, an alkyl, a hydroxyalkyl, an alkoxy, a hydroxyl, or a cyano group; L' is a connecting bond or a C3-4 alkylene group; in formula (6), R'₄, R'₅, and R'₆ are each independently hydrogen, an alkyl, a hydroxyalkyl, an alkoxy, a hydroxyl, or a cyano group, n' = 3 to 6, and in formula (7), R'₁₁, R'₁₂, and R'₁₃ are each independently hydrogen, an alkyl, a hydroxyalkyl, an alkoxy, a hydroxyl, or a cyano group, and m' = 3 to 6. The optimization of the structure of the structural unit facilitates the formation of a high-density three-dimensional network system, which is beneficial to improve the adhesion and the water resistance.

In any embodiment, in the second polymer, the mass ratio of the structural unit represented by formula (5) is 10% to 60%, the mass ratio of the structural unit represented by formula (6) is 5% to 20%, and the mass ratio of the structural unit represented by formula (7) is 20% to 60%. The content of each structural unit is within the above range, which is advantageous for the formation of a high-density three-dimensional network crosslinked system, and is advantageous for the further improvment of the adhesion and the water resistance.

In any embodiment, the second polymer has a number-average molecular weight of from 200,000 to 1,200,000, optionally from 250,000 to 600,000. The number-average molecular weight is configured within the above range such that the molecular chain of the binder may achieve partial entanglement effect in the aqueous coating, which is advantageous for the formation of a three-dimensional network structure in the aqueous coating, thereby improving the adhesion. Meanwhile, when the number-average molecular weight is within the above range, the aforesaid entanglement effect may be controlled within an appropriate range, thereby achieving excellent flexibility.

In any embodiment, the structural unit of the formula (2) and the structural unit of the formula (6) are both 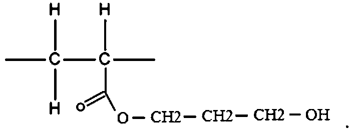 The above structural unit is configured to have the specific structure, which greatly improves the adhesion of the binder in the aqueous pole piece, and improves the water resistance of the aqueous pole piece.

In any embodiment, the mass ratio of the first polymer to the second polymer is 9:1 to 1:9, optionally, 4:1 to 1:4. The mass ratio of the first polymer to the second polymer is configured within the above range, which may forms hydrogen bonds at a high density, which is advantageous for the formation of a high-density three-dimensional network system and for the further improvement of the water resistance.

In any embodiment, the solvent is water. With water as a solvent, the cost is low, and the environment is friendly and pollution-free. In any embodiment, the composition further includes an insulating material and/or a dispersant, optionally, the insulating material is a ceramic material, optionally, the ceramic material is boehmite powder, and optionally, the dispersant is a polyacrylamide-based dispersant. Hence, it is advantageous for enhancing the insulating properties and improving the safety performance of the battery.

A second aspect of the present application further provides an aqueous pole piece, including an aqueous coating; the aqueous coating is formed from the above aqueous coating composition of the first aspect of the present application, and has a crosslinked three-dimensional network structure. The aqueous coating is configured to include the crosslinked three-dimensional network structure, which improves the adhesion and water resistance of the aqueous coating, and enhances the cycle performance and safety performance of the battery.

In any embodiment, the aqueous coating contains 10%-30% by mass, and optionally 15%-25% by mass of the aqueous binder relative to the total mass of the aqueous coating. The content of the binder is configured within the above range, which may improve the adhesion of the aqueous coating and improve the water resistance, and is beneficial to increasing the content of the insulating material to enhance the insulating effect.

In any embodiment, the aqueous coating contains an insulating material in an amount of 65%-80% by mass with respect to the total mass of the aqueous coating, and a dispersant in an amount of 0.2%-1.0% by mass with respect to the total mass of the aqueous coating. Hence, it is advantageous for enhancing the insulating properties and improving the safety performance of the battery.

In any embodiment, a contact angle of the aqueous coating with water is less than or equal to 90°, optionally 40° to 80°. Therefore, the aqueous coating in the aqueous pole piece has a good wettability; the coating spreads more sufficiently on the substrate and has a large contact area, which is beneficial to improving the adhesion of the aqueous coating to the surface of the substrate, thus reducing the risk of falling off.

In any embodiment, the aqueous coating on the aqueous pole piece has a peel strength of greater than or equal to 10 N/m, optionally greater than or equal to 17 N/m; and the peel strength is obtained by a peel test based on the national standard GB/T 41511-2022.

In any embodiment, the aqueous pole piece is an aqueous positive pole piece or an aqueous negative pole piece.
Provided in a third aspect of the present application is an aqueous battery, including the aqueous pole piece according to the second aspect of the present application. Therefore, the aqueous battery of the present application has excellent safety performance and cycle performance

A fourth aspect of the present application further provides an electric device, including the aqueous battery according to the third aspect of the present application.

### Effects of the Invention

The aqueous coating composition of the present application forms a crosslinked three-dimensional network structure in the aqueous coating by including a polymer having a specific structure as an aqueous binder, which improves the adhesion of the aqueous coating in the pole piece, thereby improving the water resistance of the coating. Moreover, the polymer includes a flexible structural unit having an ester structure, which can enhance the flexibility of the coating to facilitate the further improvement of the water resistance of the coating. The aqueous pole piece of the present application includes a coating layer having high adhesion and high water resistance, thereby achieving the technical application of the aqueous pole piece and improving the safety performance and cycle performance of the aqueous battery.

### DESCRIPTION OF DRAWINGS

FIG. 1 is a local schematic section view showing an pole piece according to an embodiment of the present application;
FIG. 2 is an infrared spectrum diagram obtained by performing an infrared test on a first polymer 1-20 obtained in a preparation example of the present application; and
FIG. 3 is an infrared spectrum diagram obtained by performing an infrared test on an aqueous coating of a positive pole piece after a battery prepared in Example 24 is disassembled in the present application.

### Description of numeral numbers

1-current collector, 11-conductive layer, 12-insulating layer, 13-substrate, 2-active material layer.

### DESCRIPTION OF EMBODIMENTS

The embodiments of the aqueous coating composition, the aqueous pole piece, the aqueous battery, and the electric device of the present application will be described in detail hereinafter. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise stated, the following terms used in the description and claims have the following meanings:
"Halogen" means fluorine, chlorine, bromine or iodine, and optionally fluorine or chlorine.

"Alkyl" refers to a saturated aliphatic hydrocarbon group, including linear and branched groups having 1 to 20 carbon atoms; and optionally, medium-sized alkyl groups having 1 to 10 carbon atoms, such as methyl, ethyl, propyl, 2-propyl, n-butyl, isobutyl, tert-butyl, and pentyl; and further, optionally, lower alkyl groups having 1 to 4 carbon atoms, for example, methyl, ethyl, propyl, 2-propyl, n-butyl, isobutyl, or tert-butyl. Alkyl may be substituted or unsubstituted; when substituted, the group is optionally halogen, hydroxyl, lower alkoxy, aryl, aryloxy, heteroaryl, and heterocycloalkyl.

The "hydroxyalkyl" refers to a group formed by substituting a hydrogen atom in the above alkyl with a hydroxy group.

"Cycloalkyl" refers to a 3 to 8-membered all-carbon monocyclic, all-carbon 5-/6- or 6-/6-membered fused ring or polycyclic fused ring ("fused ring" refers that each ring in the system shares an adjacent pair of carbon atoms with other rings in the system) group, where one or more rings may contain one or more double bonds, but none of the rings has a completely conjugated π-electron system. Examples of the cycloalkyl include cyclopropyl, cyclobutyl, cyclopentyl, cyclopentene, cyclohexane, cyclohexadiene, adamantane, cycloheptane, cycloheptatriene, and the like. Cycloalkyl may be substituted or unsubstituted. When substituted, it may be one or more substituents independently selected from lower alkyl, trihaloalkyl, halogen, hydroxyl, lower alkoxy, aryl, aryloxy, 6-membered heteroaryl, 5-membered heteroaryl, or 5- or 6-membered heterocycloalkyl, mercapto, (lower alkyl)thio, cyano, nitro, carboxy, or ester group.

"Alkoxy" refers to both -O (alkyl) and -O (unsubstituted cycloalkyl). Here, the definitions of the alkyl and the cycloalkyl are the same as described above. Representative examples include, but are not limited to, methoxy, ethoxy, propoxy, butoxy, cyclopropoxy, cyclobutoxy, cyclopentyloxy, cyclohexyloxy, and the like.

"Alkenyl" refers to an alkyl group, as defined above, consisting of at least two carbon atoms and at least one carbon-carbon double bond. Representative examples include, but are not limited to, ethenyl, 1-propenyl, 2-propenyl, 1-, 2- or 3-butenyl, and the like.

"Alkynyl" refers to an alkyl group as defined above, consisting of at least two carbon atoms and at least one carbon-carbon triple bond. Representative examples include, but are not limited to, ethynyl, 1-propynyl, 2-propynyl, 1-, 2- or 3-butynyl, and the like.

"Heterocycloalkyl" refers to a monocyclic or fused ring group having 5 to 9 ring atoms in the ring, where one or two ring atoms are selected from nitrogen, oxygen or sulfur, and the remaining ring atoms are carbon. These rings may also have one or more double bonds, but these rings do not have a completely conjugated π-electron system. Unsubstituted heterocycloalkyl includes, but is not limited to, pyrrolidinyl, piperidino, morpholinyl, thiomorpholinyl, homopiperazinyl, and the like, and heterocycloalkyl may be substituted or unsubstituted. When substituted, the substituent is preferably optionally substituted with one or more substituents selected from halogen, trihalomethyl, hydroxyl, nitro, cyano, alkoxy, alkyl, carboxy, ester groups.

"Aryl" refers to a group having at least one aromatic ring structure, i.e., an aromatic ring having a conjugated π-electron system, including carbocyclic aryl, heteroaryl and biaryl. The aryl may be optionally substituted by one or more substituents selected from halogen, trihalomethyl, hydroxyl, nitro, cyano, alkoxy, alkyl, carboxy, ester groups.

"Heteroaryl" refers to an aryl group having from 1 to 3 heteroatoms as ring atoms, the remaining ring atoms being carbon, and heteroatoms including oxygen, sulfur and nitrogen. The ring may be a 5- or 6-membered ring. Examples of heterocyclic aryl include furyl, thienyl, pyridyl, pyrrolyl, N-alkylpyrrolyl, pyrimidinyl, pyrazinyl, imidazolyl, and the like. The heteroaryl may be optionally substituted by one or more substituents selected from halogen, trihalomethyl, hydroxyl, nitro, cyano, alkoxy, alkyl, carboxylic acid, ester group.

Unless otherwise specified, all embodiments and optional embodiments of this application may be combined with each other to form new technical solutions.

Unless otherwise specified, all technical features and optional technical features of this application can be combined with each other to form new technical solutions.

At present, battery pole pieces are gradually turning to environmentally-friendly and pollution-free aqueous pole piece systems, but the existing insulating coating formula systems are not suitable for the aqueous pole piece systems. The reason is that most of the existing insulating coating formula systems are oily systems. That is, N-methylpyrrolidone (NMP) is used as a solvent, and most of the used binders also dissolved in NMP, such as polyvinylidene fluoride (PVDF), polyimide, etc. Because NMP is a petroleum-derived chemical product, its synthesis and post-treatment process are complicated. Moreover, during the preparation of the pole piece, a large amount of NMP toxic gas will volatilize into the air to pollute the environment and cause harm to the human body, which is contrary to one of the main purposes, i.e., environmental protection of the aqueous pole piece system. In addition, the above oil-based formula system of the insulating coating is not compatible with the aqueous pole piece, and the solvent water in the aqueous pole piece system has a different drying efficiency from the solvent NMP in the existing formula systems of the insulating coating, thus resulting in poor coating and drying of the pole piece; moreover, the film layer area is easily over-dried during the temperature-rise period to cause cracking and even falling off.

Therefore, there is an urgent need for an aqueous insulating coating in the current aqueous pole pieces, which not only needs to have excellent adhesion, but also needs to have water resistance to adapt to the application of aqueous batteries.

On this basis, the present application provides an aqueous coating composition suitable for an aqueous pole piece, which including an aqueous binder and a solvent. The aqueous binder includes a first polymer.

### First polymer

The first polymer contains a structural unit represented by the following formula (1) and a structural unit represented by the following formula (2).

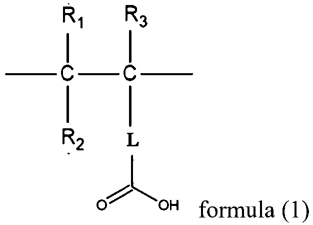

In the formula (1), R₁, R₂ and R₃ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and L is a connecting bond or a C1-10 alkylene group.

The C1-10 alkylene group refers to an alkylene group having 1 to 10 carbon atoms, for example, it may be, but not limited to, a methylene group, an ethylidene group, a propylidene group, a butylidene group, a pentylidene group, a hexylidene group, a heptylidene group, an octamethylene group, a nonylidene group, a decylidene group, and the like.

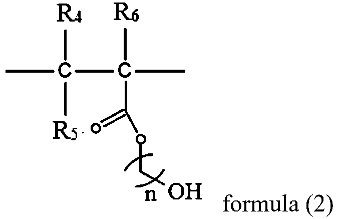

In the formula (2), R₄, R₅ and R₆ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, n = 2 to 12.

The aqueous binder in the present application has a special cross-linkable structure and has a certain number of ester structures represented by formula (2), so that the binder molecular chain is changed from linear to a firmer three-dimensional network structure, thereby improving the water resistance of the aqueous coating. Meanwhile, the ester structure represented by formula (2), as a lipophilic group, can enable the aqueous coating infiltrated and spread on the substrate (aluminum foil, etc.) better to obtain a better bonding effect. Hence, the aqueous film layer have high adhesion and high water resistance, thus improving the safety and cycle performance of the battery.

In some embodiments, in formula (1), R₁, R₂, and R₃ are each independently hydrogen, alkyl, hydroxyalkyl, alkoxy, hydroxyl, or cyano, L is a connecting bond or C3-4 alkylene, and in formula (2), R₄, R₅, and R₆ are each independently hydrogen, alkyl, hydroxyalkyl, alkoxy, hydroxyl, or cyano, and n is 3 to 6, for example, 3, 4, 5, or 6. The above structural units are configured to have the aforesaid functional groups, which may further enhance the adhesion between the coating and the current collector. Moreover, as the battery is used, the improvement of the adhesion is advantageous for further improving the cycle performance of the battery.

In some embodiments, in the above first polymer, the mass ratio of the structural unit represented by formula (1) is 10% to 75%, and the value may be a value of two endpoints, and also may be any value between the two endpoints, such as 10%, 20%, 30%, 40%, 50%, 60%, 70%, 75%, but is not limited thereto. The mass ratio of the structural unit represented by the above formula (2) is 5% to 40%, and the value may be a value of two endpoints, and also may be any value between the two endpoints, such as 5%, 10%, 20%, 25%, 30%, 40%, but is not limited thereto. When the mass ratios of the structural units are configured within the above ranges, a crosslinked high-density structure may be formed, which is advantageous for improving the water resistance of the aqueous coating.

In some embodiments, the above first polymer further includes a structural unit represented by formula (3) and/or a structural unit represented by formula (4):

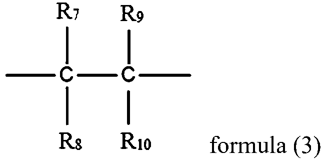

In the formula (3), R₇, R₈ and R₉ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group;

R ₁₀ is a rigid group, optionally a cyano, an amido or an aryl, optionally a cyano group.

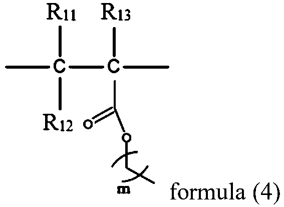

In the formula (4), R₁₁, R₁₂ and R₁₃ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and m = 2 to 12.

The structural unit represented by formula (3) is a hard segment to provide strength for materials, and the structural unit represented by formula (4) is a soft segment to provide flexibility for materials, thereby enhancing the infiltration and spreading of the coating on the substrate, especially the oil-containing substrate (e.g., the oil-containing aluminum foil), which is beneficial to improve the adhesion and the water resistance.

In some embodiments, in the first polymer, the mass ratio of the structural unit represented by formula (3) is 5% to 40%. The value may be a value of two endpoints or any value between the two endpoints, for example, 10%, 20%, 30%, or 40%, but is not limited thereto. The content of the structural unit is configured within the above ranges to facilitate that the aqueous coating has an appropriate hardness better, and to facilitate the improvement of the adhesion.

In some embodiments, in the first polymer, the mass ratio of the structural unit represented by formula (4) is 10% to 75%. The value may be a value between two endpoints or any value between two endpoints, for example, 10%, 15%, 20%, 30%, 40%, 50%, 60%, or 70%, but is not limited thereto. The content of the structural unit is configured within the above ranges to facilitate that the aqueous coating has an appropriate flexibility better, and to facilitate the improvement of the water resistance.

In some embodiments, in the above first polymer, the mass ratio of the structural unit represented by the formula (1) is 30% to 55%; the mass ratio of the structural unit represented by the formula (2) is 5% to 15%; the mass ratio of the structural unit represented by the formula (3) is 10% to 20%, and the mass ratio of the structural unit represented by the formula (4) is 30% to 55%. The content of each structural unit is configured within the above range to facilitate the formation of a crosslinked three-dimensional network structure to improve the adhesion and water resistance of the aqueous coating.

In some embodiments, the connecting bonds at both sides of each structural unit in the above first polymer are connected to each other to form a polymer chain as shown below, but the connection manner of each structural unit in the first polymer is not limited thereto.

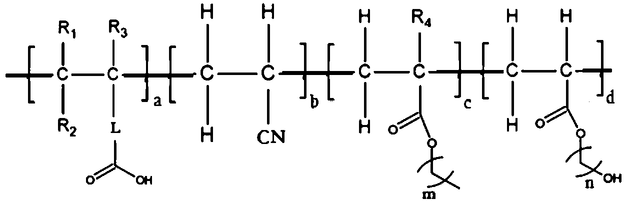

a and d are any integer of greater than 0, b and c are each any integer of ≥ 0. The values of the above a, b, c and d may be the same or different.

In some embodiments, the number-average molecular weight of the above first polymer is 200,000 to 1,000,000, and optionally 300,000 to 600,000. The number-average molecular weight is configured within the above range such that the molecular chain of the binder may achieve partial entanglement effect in the aqueous coating, which is advantageous for the formation of a three-dimensional network structure in the aqueous coating to improve the adhesion. Meanwhile, the number-average molecular weight is configured within the above range such that the above entanglement effect may be controlled within an appropriate range, thus obtaining excellent flexibility and improving the water resistance of the aqueous coating.

### Second polymer

In some embodiments, in the aqueous coating composition of the present application, the aqueous binder further includes a second polymer that is different from the first polymer, and includes a group capable of reacting with the first polymer; and the above group is capable of forming a hydrogen bond and/or a cross-linked structure with the first polymer. A crosslinked high-density three-dimensional network structure may be formed by further including the second polymer to form a hydrogen bond and/or a crosslinked structure with the first polymer, thereby improving the adhesion and water resistance of the aqueous coating. The so-called "the second polymer is different from the first polymer" includes the case where each structural unit of the second copolymer is different from that the first copolymer, the case where each structural unit of the second copolymer is the same as the first copolymer but the connection manner of each structural unit is different, and the case where each structural unit of the second copolymer is the same as the first copolymer but the mass ratio of each structural unit is different.

In some embodiments, the above second polymer includes a flexible group, and the flexible group is a group containing an ester bond or a group containing an ether bond. The flexible group includes, but is not limited to, a methyl acrylate group, an ethyl acrylate group, a propyl acrylate group, a methoxy group, an ethoxy group, and the like. The above groups may improve the flexibility of the coating to effectively reduce the risk of turning over tabs, which helps to improve the water resistance of the coating and the safety performance of the battery.

In some embodiments, the above second polymer includes a structural unit represented by formula (5), a structural unit represented by formula (6), and a structural unit represented by formula (7).

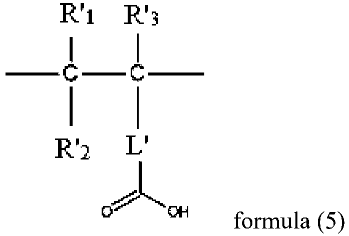

In the formula (5), R'₁, R'₂ and R'₃ are the same as or different from R₁, R₂ and R₃, respectively, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group; and L' is the same as or different from L and is a connecting bond or a C1-10 alkylene group. Here, the definition of "C1-10 alkylene group" is the same as that in the first polymer.

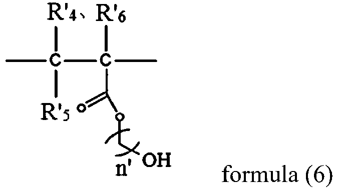

In the formula (6), R'₄, R'₅ and R'₆ are the same as or different from R₄, R₅ and R₆, respectively, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, n' is the same as or different from n, and n' = 2 to 12.

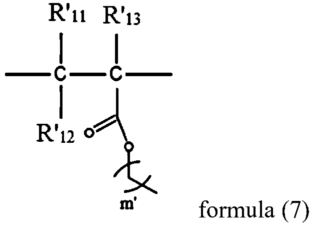

In the formula (7), R'₁₁, R'₁₂, and R'₁₃ are the same as or different from R₁₁, R₁₂, and R₁₃, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group, or a nitro group, m' is the same as or different from m, and m' = 2 to 12.

In the present application, by mixing two polymers, the carboxyl group of the structural unit represented by formula (1) and/or the hydroxyl group of the structural unit represented by formula (2) in the first polymer are interacted with the carboxyl group of the structural unit represented by formula (5) and/or the hydroxyl group of the structural unit represented by formula (6) in the second polymer to form a hydrogen bond; or a new chemical bond, e.g., an ester bond is formed via further interaction via heating and other treatment to construct a crosslinked high-density three-dimensional network structure inside the coating. Thereby, such a configuration provides a more sufficient adhesion for the aqueous coating and further improves the water resistance of the aqueous coating.

In addition, the acrylonitrile monomer, which is the structural unit represented by formula (3) in the first polymer, is a hard monomer, and may provide strength for the material. The structural unit represented by formula (7) in the second polymer, i.e., the acrylate monomer, is a soft monomer, which may provide flexibility to the coating. As a lipophilic group, the monomer may enable the aqueous coating to be infiltrated and spread on the substrate, especially the oil-containing substrate (e.g., the oil-containing aluminum foil), which is beneficial to improve the water resistance and safety of the battery.

In some embodiments, in formula (5), R'₁, R'₂, and R'₃ are each independently hydrogen, an alkyl, a hydroxyalkyl, an alkoxy, a hydroxyl, or a cyano group; L' is a connecting bond or C3-4 alkylene; in formula (6), R'₄, R'₅, and R'₆ are each independently hydrogen, an alkyl, a hydroxyalkyl, an alkoxy, a hydroxyl, or a cyano group, n' = 3 to 6; in formula (7), R'₁₁, R'₁₂, and R'₁₃ are each independently hydrogen, an alkyl, a hydroxyalkyl, an alkoxy, a hydroxyl, or a cyano group, and m' = 3 to 6. Here, the above structural units are configured to have the above functional groups such that the adhesion between the coating layer and the current collector is further improved. Moreover, as the battery is used, the improvement of the adhesion is advantageous for further improving the cycle performance.

In some embodiments, in the above second polymer, the mass ratio of the structural unit represented by formula (5) is 10% to 60%, the mass ratio of the structural unit represented by formula (6) is 5% to 20%, and the mass ratio of the structural unit represented by formula (7) is 20% to 60%. The mass ratio of each structural unit is configured within the above range to facilitate the formation of a high-density three-dimensional network system, which is advantageous for further improving the adhesion and further enhancing the water resistance.

In some embodiments, the structural unit represented by formula (2) in the first polymer and the structural unit represented by formula (6) in the second polymer are both 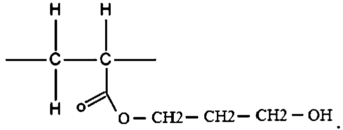 By adopting a structure of hydroxypropyl ester, that is, by controlling the length of the alkane chain, the swelling rate of the binder material in the electrolyte solution may be effectively reduced as compared to the case of a relatively long chain such as hydroxybutyl ester and hydroxyhexyl ester, such that the coating layer may be effectively adhered onto the substrate during long-term use, thereby further reducing the possibility of peeling off. In addition, compared with the case of a shorter chain such as hydroxymethyl ester and hydroxyethyl ester, as the carbon chain is longer, the pole piece coating is more flexible, which reduces the risk the bending and brittle failure of the coating, and facilitates the improvement of the water resistance. In addition, when the structural unit represented by the formula (2) is consistent with the structural unit represented by the formula (6), the intermolecular force will be further enhanced, thus improving the adhesion and the water resistance.

In some embodiments, the structural units in the above second polymer are connected to each other to form a polymer chain as shown below, but the connection manner of the structural units in the second polymer is not limited thereto.

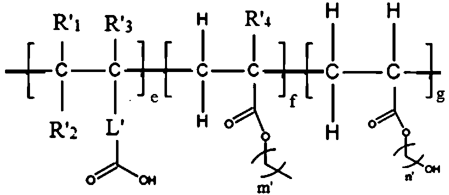

e and g are any integer of greater than 0; and f is any integer of ≥ 0. The values of the above e, f, and g may be the same or different.

In some embodiments, the second polymer has a number-average molecular weight of 200,000 to 1,200,000, optionally 250,000 to 600,000. The number-average molecular weight is configured within the above range such that the molecular chain of the binder can achieve partial entanglement effect in the aqueous coating, which is advantageous for the formation of a three-dimensional network structure in the aqueous coating, thereby improving the adhesion. Meanwhile, when the number-average molecular weight is configured within the above range, the aforesaid entanglement effect may be controlled within an appropriate range, thereby achieving excellent flexibility. Hence, the water resistance of the aqueous coating is improved.

In some embodiments, the mass ratio of the above first polymer to the second polymer is 9:1 to 1:9, optionally 4:1 to 1:4. The mass ratio of the first polymer to the second polymer is configured within the above range, which is advantageous for the formation of a high-density three-dimensional network system, and advantageous for further improving the adhesion.

### Aqueous coating composition

In some embodiments, the aqueous coating composition further includes an insulating material and/or a dispersant in addition to the above aqueous binder, and optionally, the insulating material is a ceramic material. The ceramic material includes, but is not limited to, alumina, boehmite, zirconia, titanium oxide, silicon nitride, boron carbide, and the like, and optionally boehmite powder. The dispersant may be, for example, a polyacrylamide-based dispersant. In the coating, the carboxyl group of the structural unit represented by formula (1) in the first polymer and the carboxyl group of the structural unit represented by formula (5) in the second polymer may form a hydrogen bond with the insulating material boehmite, which further improves the adhesion of the aqueous coating.

In some embodiments, as a solvent, water, for example, deionized water is used. With water as a solvent, the cost may be reduced, and the environment is pollution-free to achieve green and environmental protection, as compared to the oil-based pole piece using NMP as a solvent.

The aqueous coating paste may be prepared by the following method, but is not limited thereto.
(1) A dispersant is added into deionized water, dispersed and stirred at a dispersing speed of 500 rpm to 2000 rpm for 5 min to 30 min to obtain a dispersion liquid (1);
(2) Boehmite is added into the above dispersion liquid (1), dispersed and stirred for 30 min to 120 min at a dispersion speed of 500 rpm to 2000 rpm to obtain a dispersion liquid (2);
(3) The first polymer as a binder is added to the above dispersion liquid (2), and stirred at a dispersion speed of 500 rpm to 2000 rpm for 30 min to 120 min to obtain a dispersion liquid (3) as an aqueous coating paste.

When the aqueous binder further includes a second copolymer, the following steps are further performed:
(4) A second polymer as a binder is added into the above dispersion liquid (3), and stirred at a dispersion speed of 200 rpm to 1000 rpm for 15 min to 60 min to obtain a coating paste, and further stirred at a dispersion speed of 500 rpm to 800 rpm for 20 min to 40 min to obtain an aqueous coating paste.

### [Aqueous pole piece]

The present application also provides an aqueous pole piece, including an aqueous coating; the above aqueous coating is formed from the aqueous coating composition according to the first aspect of the present application, and has a crosslinked three-dimensional network structure. The aqueous coating is configured to contain a crosslinked three-dimensional network structure to improve the water resistance of the aqueous coating, thereby reducing the risk of film peeling.

In some embodiments, the aqueous binder is in an amount of 10%-30% by mass, and optionally, 15%-25% by mass relative to the total mass of the aqueous coating. The content of the binder is configured within the above range, which may enhance the adhesion of the aqueous coating and improve the water resistance.

In some embodiments, the insulating material is in an amount of 70%-80% by mass, and optionally, 65%-80% by mass relative to the total mass of the aqueous coating. Moreover, the dispersant is in an amount of 0.2%-1.0% by mass, and optionally 0.5%-0.8% by mass relative to the total mass of the aqueous coating. This thus contributes to the improvement of the insulation effect.

In some embodiments, the contact angle of the aqueous coating with water is less than or equal to 90 °, optionally 40° to 80°. The contact angle (θ) refers to the included angle θ between the tangent line of the gas-liquid interface and the solid-liquid boundary at the intersection of the gas, liquid and solid phases, and is a measurement of the degree of wetting. If θ < 90 °, the solid is lyophilic; that is, solid may be moistened by liquid; and the smaller the angle, the better the wettability, and if θ > 90 °, the solid is lyophobic, that is, the liquid does not moisten the solid, and easily moves on the surface and fails to enter the capillary.

In the present application, the contact angle of the aqueous coating with water is configured within the above range such that the wettability of the aqueous coating in the aqueous pole piece is good, the coating spreads more sufficiently on the substrate, and the contact area is increased, which is beneficial to improving the adhesion of the aqueous coating to the surface of the substrate, improving the water resistance of the aqueous coating, and reducing the risk of falling off.

In some embodiments, the aqueous coating on the aqueous pole piece has a peel strength of greater than or equal to 10 N/m, optionally greater than or equal to 17 N/m. The peel strength may be obtained by performing a peel test with reference to the national standard GB/T 41511-2022.

In some embodiments, the aqueous pole piece is an aqueous positive pole piece or an aqueous negative pole piece.

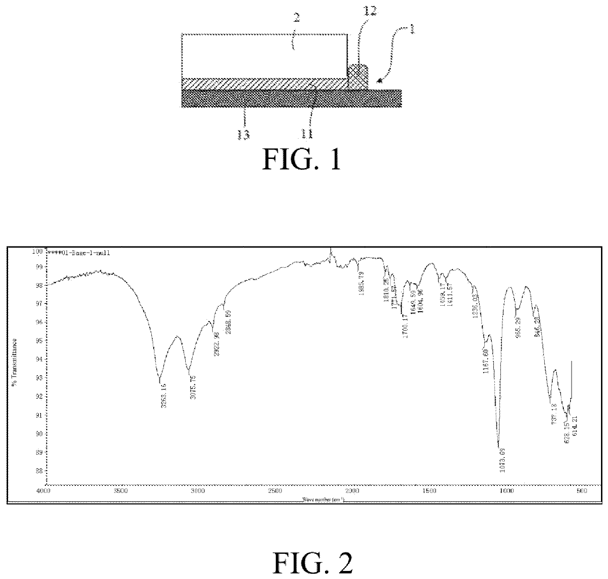

The aqueous coating composition of the present application may be used to form an insulating coating in an aqueous positive pole piece. Hereinafter, the method for preparing an pole piece will be exemplarily described with reference to FIG. 1.

In the preparation of the aqueous positive pole of the battery, the insulating material, the aqueous binder, the dispersant, and the deionized water may be made into an aqueous coating paste with reference to the above method. The insulating coating paste and the conductive layer paste are respectively coated on at least one surface of the substrate 13 (aluminum foil), and then dried to form an insulating coating 12 and a conductive layer 11 on the substrate 13, to obtain the composite positive pole current collector 1. Then, a paste containing an active material is applied onto the conductive layer 11 to form an active material layer 2, thereby producing an pole piece.

In the drying process of the pole piece, under the action of heating, the carboxyl/hydroxyl groups in the aqueous binder are reacted to form hydrogen bonds and/or cross-linked structures, thus forming a crosslinked three-dimensional network structure. Therefore, the obtained aqueous pole piece has excellent adhesion and improved water resistance to obviously reduce the occurrence of film peeling and enhance the safety performance of the battery.

The thickness of a single layer of the insulating coating formed by the aqueous coating paste is 1 um to 20 um, optionally 2 um to 8 um. The thickness is configured to 1 um or more such that a good insulation protection effect may be achieved; and when the thickness is configured to 20 um or less, it is beneficial to the improvement of the energy density of the battery. In addition, the width of the insulating coating is 1 mm to 20 mm, optionally 3 mm to 10 mm, which is beneficial to the improvement of the energy density of the battery while obtaining good insulation protection.

The surface density of the positive pole film layer of the aqueous positive pole piece of the present application is 250 mg/1540.25 mm² to 500 mg/1540.25 mm², which may reach or even exceed the coating weight of the oil-based pole piece. In addition, the drying temperature of the aqueous pole piece is 60°C to 120°C, while the drying temperature of the conventional oil-based pole piece is 110°C to 140°C, so the application of the aqueous pole piece may greatly save energy consumption.

### Aqueous battery

In an embodiment of the present application, an aqueous battery is provided.

The term "battery" as referred to herein refers to a battery cell, a battery module, or a battery pack.

Generally, the battery cell includes a positive pole piece, a negative pole piece, an electrolyte, and a separator. During charge and discharge of the battery, active ions are intercalated and deintercalated back and forth between the positive pole piece and the negative pole piece. The electrolyte functions to conduct ions between the positive pole piece and the negative pole piece. The separator is disposed between the positive pole piece and the negative pole piece, to mainly prevent positive and negative poles from being short-circuited and allow ions to pass through.

### [Positive pole piece]

The positive pole piece includes a positive current collector and a positive pole film layer disposed on at least one surface of the positive current collector, the positive pole film layer includes an aqueous coating of the present application as an insulating coating.

As an example, the positive pole current collector has two surfaces opposed in its own thickness direction, and the positive pole film layer is provided on either one or both of the two opposed surfaces of the positive pole current collector.

In some embodiments, the positive pole current collector may be a composite current collector. The composite current collector may include a substrate layer, and a conductive layer and an insulating layer disposed on at least one surface of the substrate layer.

In some embodiments, when the battery cell is a lithium-ion battery, the positive pole active material may be the positive pole active materials well-known in the art for lithium-ion batteries. As an example, the positive pole active material may include at least one of olivine-structured lithium-containing phosphate, lithium-transition metal oxide, and their respective modifying compounds. However, the present application is not limited to these materials, and other conventional materials that can be used as a positive pole active material of a battery may also be used. These positive pole active materials may be used alone or in combination of two or more thereof. Among them, examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.15}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

In some embodiments, the positive pole film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and a fluorine-containing acrylate resin.

In some embodiments, the positive pole film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the positive pole piece may be prepared in the following manner: dispersing the foregoing components such as the positive pole active material, the conductive agent, the aqueous binder, and any other components for preparing the aqueous positive pole piece into a solvent (for example, water) to form an aqueous positive pole paste; and coating the positive pole paste on a positive pole current collector, and performing procedures such as drying and cold pressing, to obtain the positive pole piece.

### [Negative pole piece]

The negative pole piece includes a negative pole current collector and a negative pole film layer disposed on at least one surface of the negative pole current collector, the negative pole film layer including a negative pole active material.

As an example, the negative pole current collector has two surfaces opposite in its own thickness direction, and the negative pole film layer is disposed on either one or both of the two opposite surfaces of the negative pole current collector.

In some embodiments, the negative pole current collector may use a metal foil or a composite current collector. For example, a copper foil may be used as the metal foil. The composite current collector includes a substrate layer and a conductive layer and an insulating layer disposed on at least one surface of the substrate layer.

In some embodiments, the negative pole active material may be a negative pole active material well-known in the art for batteries. As an example, the negative pole active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and another conventional material that can be used as a negative pole active material of a battery may also be used. These negative pole active materials may be used alone or in combination of two or more thereof.

In some embodiments, the negative pole film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative pole film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative pole film layer further optionally includes another auxiliary agent, for example, a thickening agent (e.g., sodium carboxymethyl cellulose (CMC-Na)).

In some embodiments, the negative pole piece may be prepared in the following manner: dispersing the above-mentioned components for preparing the negative pole piece, for example, the negative pole active material, the conductive agent, the binder, and any other component in a solvent (e.g., deionized water) to form a negative pole paste; and coating the negative pole paste on the negative pole current collector, and performing procedures such as drying and cold pressing, to obtain the negative pole piece.

### [Electrolyte]

The electrolyte functions to conduct ions between the positive pole piece and the negative pole piece. The electrolyte solution includes an electrolyte salt and a solvent. The type of the electrolyte salt and solvent is not specifically limited in present application, and may be selected according to the requirement.

In some embodiments, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution further optionally includes an additive. For example, the additive may include a negative pole film-forming additive or a positive pole film-forming additive, and may further include an additive capable of improving specific performance of a battery, for example, an additive for improving overcharge performance of a battery, or an additive for improving high-temperature or low-temperature performance of a battery.

### [Separator]

In some embodiments, the aqueous battery further includes a separator. The type of the separator is not particularly limited in the present application, and any known porous separator having good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive pole piece, the negative pole piece, and the separator may be manufactured into the pole assembly through a winding process or a lamination process.

In some embodiments, the battery cell may include an outer package. The outer package may be used to package the pole assembly and the electrolyte.

In some embodiments, the outer package of the battery cell may be a hard casing, for example, a hard plastic casing, an aluminum casing, or a steel casing. The outer package of the battery cell may also be a pouch, such as a bag-type pouch. The material of the pouch may be plastic, and examples of the plastic include polypropylene, polybutylene terephthalate, and polybutylene succinate.

The shape of the battery cell is not particularly limited in the present application, and may be a cylindrical shape, a square shape, or any other shape.

In some embodiments, the battery cell may be assembled into a battery module, there may be one or a plurality of battery cells included in the battery module, and those skilled in the art may make a selection based on the application and capacity of the battery module.

In some embodiments, the battery modules may be further assembled into a battery pack, and there may be one or a plurality of battery modules included in the battery pack, and the specific number may be selected by those skilled in the art according to the application and capacity of the battery pack.

### Electric device

In addition, the present application further provides an electric device, including the battery provided in the present application. The battery may be used as a power supply for the electric device, or as an energy storage unit for the electric device. The electric device may include a mobile device (e.g., a mobile phone, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like, but is not limited thereto.

As the electric device, the battery cell, the battery module or the battery pack may be selected according to the use requirements.

### Examples

Examples of the present application are described below. The example described below are illustrative only and are not to be construed as limiting the present application. In the examples, specific techniques or conditions are not indicated, and they are performed according to techniques or conditions described in documents in the art or according to the specification of the product. The reagents or instruments used without specifying the manufacturer(s) are conventional products that are commercially available.

### Preparation Example

Nitrogen was introduced into a reactor at 20°C to remove oxygen, then 4.2 g of sodium dodecyl benzene sulfonate surfactant was added to 90 g of deionized water, stirred and dissolved uniformly, then the monomer CH₂=CHCOOH of formula (1), the monomer CH₂=CHCOO(CH₂)₃OH of formula (2), the monomer CH₂=CHCN of formula (3), the monomer CH₂=CHCOO(CH₂)₃CH₃ of formula (4) and 0.05 g of a chain transfer agent n-dodecyl mercaptan were added in sequence, and blended uniformly, then heated up to 85°C, and stirred uniformly to obtain a pre-emulsion.

Then, 1.5 g of ammonium persulfate initiator and 2.8 g of sodium dodecyl benzene sulfonate surfactant were continuously added dropwise to the above pre-emulsion, and at the end of the addition, the mixture was stirred at a rotation speed of 300 rpm for 120 min to obtain a polymer seed solution. Afterwards, 1.5 g of ammonium persulfate initiator was added, and the mixture was continuously stirred at 300 rpm for 120 min to obtain a polymer.

Then, the polymer was post-treated, and the reactor was cooled to room temperature, vacuumized and maintained for 30 min to return to normal pressure. Finally, the polymer was filtered through a 300-meshed filter screen, and the pH value was adjusted to 7-8 with lithium hydroxide to obtain a first polymer 1-20, the composition of which is shown in Table 1 below.

The first polymer and the second polymer shown in Tables 1 and 2 were prepared according to the compositions shown in Tables 1 and 2 below with reference to the above-described method.

**Table 1**

| First polymer No. | Formula (1) | | Formula (2) | | Formula (3) | | Formula (4) | | Number-average molecular weight (ten thousand) |
|---|---|---|---|---|---|---|---|---|---|
| | Structure | Mass ratio (%) | Structure | Mass ratio (%) | Structure | Mass ratio (%) | Structure | Mass ratio (%) | |
| 1-1 | R₁ = methyl R₂ = vinyl R₃ = HL = - CH₂ - | 95 | R₄ = methyl R₅ = H R₆ = nitro n = 2 | 5 | - | - | - | - | 30 |
| 1-2 | R₁ = HR₂ = phenyl R₃ = HL = -CH₂ - | 95 | R₄ = chloro R₅ = H R₆ = H n = 2 | 5 | - | - | - | - | 20 |
| 1-3 | R₁ = H R₂ = H R₃ = nitro L = -CH₂ - | 95 | R₄ = HR₅ = H R₆ = methoxy n = 2 | 5 | - | - | - | - | 40 |
| 1-4 | R₁ = H R₂ = H R₃ = methoxy L = -CH₂ - | 95 | R₄ = methyl R₅ = propynyl R₆ = H n = 2 | 5 | - | - | - | - | 50 |
| 1-5 | R₁ = methyl R₂ = bromo R₃ = H L = - CH₂ - | 75 | R₄ = H R₅ = hydroxyl R₆ = H n = 2 | 25 | - | - | - | - | 80 |
| 1-6 | R₁ = cyano R₂ = H R₃ = H L = -CH₂ - | 75 | R₄ =H R₅ = H R₆ = phenyl n = 2 | 25 | - | - | - | - | 100 |
| 1-7 | R₁ = H R₂ = H R₃ = H L = connecting bond | 75 | R₄=H R₅=H R₆=H n=2 | 25 | - | - | - | - | 30 |
| 1-8 | R₁ = H R₂ = H R₃ = H L = connecting bond | 60 | R₄= H R₅=H R₆=H n=4 | 40 | - | - | - | - | 30 |
| 1-9 | R₁ = H R₂ = H R₃ = H L = connecting bond | 10 | R₄= H R₅=H R₆=H n=4 | 90 | - | - | - | - | 50 |
| 1-10 | R₁ = hydroxymethyl R₂ = H R₃ = H L = connecting bond | 50 | R₄ =H R₅ = H R₆ = propenyl n = 4 | 20 | R₇ = vinyl R₈ = H R₉ = H R₁₀ = phenyl | 30 | | | 60 |
| 1-11 | R₁ = H R₂ = H R₃ = H L = connecting bond | 45 | R₄= H R₅=H R₆=H n=4 | 10 | R₇ = H R₈ = H R₉ = H R₁₀ = phenyl | 35 | - | - | 40 |
| 1-12 | R₁ = H R₂ = H R₃ = H L = connecting bond | 45 | R₄= H R₅=H R₆=H n=4 | 10 | R₇ = H R₈ = H R₉ = H R₁₀ = cyano | 35 | - | - | 40 |
| 1-13 | R₁ = HR₂ = HR₃ = cyclopropyl L = connecting bond | 50 | R₄ = hydroxyethyl R₅ = H R₆ = H n = 4 | 20 | - | - | R₁₁ = propenyl R₁₂ = H R₁₃ = H m = 2 | 30 | 50 |
| 1-14 | R₁ = H R₂ = H R₃ = H L = connecting bond | 50 | R₄= H R₅=H R₆=H n=4 | 20 | - | - | R₁₁ = H R₁₂ = H R₁₃ = nitro m = 2 | 30 | 50 |
| 1-15 | R₁ = H R₂ = H R₃ = H L = connecting bond | 50 | R₄= H R₅=H R₆=H n=4 | 20 | - | - | R₁₁ = H R₁₂=H R₁₃=H m=2 | 30 | 50 |
| 1-16 | R₁ = H R₂ = H R₃ = H L = connecting bond | 15 | R₄= H R₅=H R₆=H n=4 | 10 | - | - | R₁₁ = H R₁₂=H R₁₃=H m=2 | 75 | 50 |
| 1-17 | R₁ = phenyl R₂ = H R₃ = H L = connecting bond | 60 | R₄ = H R₅ = H R₆ = vinyl n = 2 | 15 | R₇ = chloro R₈ = H R₉ = H R₁₀ = cyano | 5 | R₁₁ = phenyl R₁₂ = H R₁₃ = H m = 3 | 20 | 40 |
| 1-18 | R₁ = propyl R₂ = H R₃ = H L = connecting bond | 60 | R₄ = H R₅ = H R₆ = ethoxy n = 2 | 15 | R₇ = methyl R₈ = H R₉ = H R₁₀ = cyano | 5 | R₁₁ = H R₁₂ = H R₁₃ = butyl m = 3 | 20 | 40 |
| 1-19 | R₁ = H R₂ = H R₃ = H L = connecting bond | 60 | R₄= H R₅=H R₆=H n=3 | 15 | R₇ = H R₈ = H R₉ = H R₁₀ = cyano | 5 | R₁₁ = H R₁₂=H R₁₃=H m=3 | 20 | 40 |
| 1-20 | R₁ = H R₂ = H R₃ = H L = connecting bond | 40 | R₄= H R₅=H R₆=H n=3 | 10 | R₇ = H R₈ = H R₉ = H R₁₀ = cyano | 10 | R₁₁ = H R₁₂=H R₁₃=H m=3 | 40 | 40 |

| | | | | | | | | | |
|---|---|---|---|---|---|---|---|---|---|
| In the table, "-" indicates no addition. | | | | | | | | | |

**Table 2**

| Second polymer No. | Formula (5) | | Formula (6) | | Formula (7) | | Number-average molecular weight (ten thousand) |
|---|---|---|---|---|---|---|---|
| | Structure | Mass ratio (%) | Structure | Mass ratio (%) | Structure | Mass ratio (%) | |
| 2-1 | R'₁ = H R'₂ = H R'₃ = propenyl L' = C₂H₄ | 8 | R'₄ = chloro R'₅ = H R'₆ = H n'= 2 | 2 | R'₁₁ = ethyl R'₁₂ = vinyl R'₁₃ = H m'= 2 | 90 | 30 |
| 2-2 | R'₁ = ethyl R'₂ = phenyl R'₃ = H L'= C ₂ H ₄ | 8 | R'₄ = propenyl R'₅ = H R'₆ = H n' = 2 | 2 | R'₁₁ = chlorine R'₁₂ = H R'₁₃ = H m' = 2 | 90 | 60 |
| 2-3 | R'₁ = HR'₂ = nitro R'₃ = H L' = C₂H₄ | 8 | R'₄ = H R's = H R'₆ = ethoxy n' = 2 | 2 | R'₁₁ = H R'₁₂ = H R'₁₃ = phenyl m' = 2 | 90 | 90 |
| 2-4 | R'₁ = H R'₂ = H R'₃ = H L' = connecting bond | 8 | R'₄=H R'₅=H R'₆=H n'=4 | 2 | R'₁₁=H R'₁₂=H R'₁₃=H m'=4 | 90 | 50 |
| 2-5 | R'₁ = H R'₂ = H R'₃ = H L' = connecting bond | 30 | R'₄=H R'₅=H R'₆=H n'=4 | 10 | R'₁₁=H R'₁₂=H R'₁₃=H m'=4 | 60 | 50 |
| 2-6 | R'₁ = H R'₂ = H R'₃ = H L' = connecting bond | 30 | R'₄=H R'₅=H R'₆=H n'=3 | 10 | R'₁₁=H R'₁₂=H R'₁₃=H m'=4 | 60 | 40 |
| 2-7 | R'₁ = H R'₂ = H R'₃ = H L' = connecting bond | 65 | R'₄=H R'₅=H R'₆=H n'=3 | 15 | R'₁₁=H R'₁₂=H R'₁₃=H m'=4 | 20 | 40 |

### Example 1

### (1) Preparation of the aqueous coating paste

91 g of alumina as an insulating material, 2 g of polyacrylamide (purchased from the Dow Chemical, model 4045N, solid content 50%) as a dispersant, and 16 g of the first polymer 1-1 (solid content 50%) as an aqueous binder were added to deionized water to prepare an insulating coating paste. The specific operation is as follows.

(1-1) The dispersant was added to deionized water, and dispersed and stirred for 30 min at a dispersion speed of 1500 rpm to obtain a dispersion liquid (1).

(1-2) Alumina was added to the above dispersion liquid (1), and the mixture was dispersed and stirred at a dispersion speed of 1500 rpm for 60 min to obtain a dispersion liquid (2).

(1-3) The first polymer 1-1 as an aqueous binder was added to the above dispersion liquid (2), and the mixture was stirred at a dispersion speed of 1200 rpm for 90 min to obtain a dispersion liquid (3) as an aqueous coating paste.

When the aqueous binder further contained a second copolymer, the second polymer was added to the above dispersion liquid (3), and the mixture was stirred at a dispersion speed of 800 rpm for 30 min to obtain an aqueous coating paste.

### (2) Preparation of a current collector

Conductive graphite (purchased from KAIN CHEMICAL, trade mark: SP5000) as a conductive material, a dispersant xanthan gum (molecular weight: about 1,000,000 g/mol, purchased from Shanghai Aladdin Biochemical Technology Co., Ltd.), an aqueous binder polyacrylic acid (number-average molecular weight: 300,000 to 800,000), a curing agent polycarbodiimide (number-average molecular weight: 10,000 to 40,000), and water were mixed to prepare a conductive paste.

The above aqueous coating paste prepared in (1) was then uniformly coated on a surface of a positive pole aluminum foil substrate within an edge region formed extending 10 mm from the edge of the substrate toward the middle, and the above conductive paste was uniformly coated on a blank region of the positive pole aluminum foil substrate except the above edge region at a coating speed of 50 to 150 m/min. Thereafter, the substrate was dried at 60-150°C, and the binder formed a crosslinked three-dimensional network structure in the aqueous coating during drying. Thus, a composite positive pole current collector including an aqueous coating layer (insulating layer) and a conductive layer was obtained. The composition of the formed aqueous coating is as shown in Table 3.

### (3) Preparation of an aqueous positive pole piece

The positive pole active material lithium iron phosphate, the conductive agent conductive carbon black, the dispersion stabilizer polyethylene and pyrrolidone, and the aqueous binder acrylic polymer were mixed in a solvent deionized water at a weight ratio of 96:1:1.2:1.8 well to prepare an aqueous positive pole paste with a deionized water content of 40 wt% and a solid content (solid content, including the positive pole active material, the conductive agent, the dispersion stabilizer and the aqueous binder) of 60 wt%. Then, the aqueous positive pole paste was uniformly applied onto the conductive layer of the above composite positive pole current collector prepared in (2), and dried to form an active material layer. Cold pressing and slitting were then performed to obtain the positive pole piece.

### (4) Preparation of negative pole piece

The negative active material artificial graphite, the conductive agent carbon black, the binder styrene-butadiene rubber (SBR), and the thickener sodium carboxymethyl cellulose (CMC) were dissolved in a solvent deionized water according to a weight ratio of 96.2:0.8:0.8:1.2, and mixed well to prepare a negative pole paste with a deionized water content of 45 wt% and a solid content (solid content, including the negative active material, the conductive agent, the binder, and the thickener) of 55 wt%. The negative pole paste was uniformly applied onto a copper foil as a negative pole current collector, dried, and cold pressed, and cut to obtain the negative pole piece.

### (5) Preparation of electrolyte solution

Organic solvents ethylene carbonate (EC)/ethyl methyl carbonate (EMC) were uniformly mixed in a glove box under an argon atmosphere (H₂O < 0.1 ppm, and O₂ < 0.1 ppm) in a volume ratio of 3:7, and a lithium salt 12.5% LiPF6 was added and dissolved in the organic solvents, and stirred well to obtain the electrolyte solution.

### (6) Preparation of a separator

A PE porous film with a thickness of 7 µm was used as a substrate, and then coated with a ceramic coating with a thickness of 2 µm, and the composite film was used as a separator.

### (7) Preparation of a lithium-ion battery

The above prepared aqueous positive pole piece, separator, and negative pole piece were stacked in sequence, so that the separator was located between the positive and negative pole pieces to play an isolation role; and then wound to obtain a battery assembly. The battery assembly was placed in an aluminum case, baked at 80°C to remove water, and then injected with the above electrolyte solution obtained in (5) and sealed, and then subjected to processes such as standing, hot and cold pressing, forming, shaping, and capacity testing to obtain the lithium-ion battery.

### Examples 2-36

Pole pieces were prepared in the same manner as in Example 1 such that the compositions of the aqueous coatings were as shown in Table 3, and then made into batteries in the same manner as in Example 1.

In Table 3, "content (wt%)" means the content of the aqueous binder, the insulating material, and the dispersant with respect to the total mass of the aqueous coating. "Boehmite" was purchased from Zhejiang Extreme Jidun New Material Technology Co., Ltd., Dv50 = 1.3 um.

**Table 3**

| No. | Aqueous binder | | | | Insulating material | | Dispersant | |
|---|---|---|---|---|---|---|---|---|
| | Composition | | | Content/wt% | Type | Content/wt% | Type | Content/wt% |
| | First polymer | Second polymer | Mass ratio of first polymer to second polymer | | | | | |
| Example 1 | 1-1 | - | - | 8 | Alumina | 91 | Polyacrylamide | 1.0 |
| Example 2 | 1-1 | - | - | 10 | Boron carbide | 89.2 | Polyacrylamide | 0.8 |
| Example 3 | 1-1 | - | - | 20 | Boehmite | 79.4 | Polyacrylamide | 0.6 |
| Example 4 | 1-1 | - | - | 30 | Boehmite | 69.4 | Polyacrylamide | 0.6 |
| Example 5 | 1-1 | - | - | 35 | Boehmite | 64.5 | Polyacrylamide | 0.5 |
| Example 6 | 1-2 | - | - | 20 | Boehmite | 79.5 | Polyacrylamide | 0.5 |
| Example 7 | 1-3 | - | - | 20 | Boehmite | 79.5 | Polyacrylamide | 0.5 |
| Example 8 | 1-4 | - | - | 20 | Boehmite | 79.5 | Polyacrylamide | 0.5 |
| Example 9 | 1-5 | - | - | 20 | Boehmite | 79.5 | Polyacrylamide | 0.5 |
| Example 10 | 1-6 | - | - | 20 | Boehmite | 79.5 | Polyacrylamide | 0.5 |
| Example 11 | 1-7 | - | - | 20 | Boehmite | 79.5 | Polyacrylamide | 0.5 |
| Example 12 | 1-8 | - | - | 20 | Boehmite | 79.5 | Polyacrylamide | 0.5 |
| Example 13 | 1-9 | - | - | 20 | Boehmite | 79.5 | Polyacrylamide | 0.5 |
| Example 14 | 1-10 | - | - | 20 | Boehmite | 79.5 | Polyacrylamide | 0.5 |
| Example 15 | 1-11 | - | - | 20 | Boehmite | 79.5 | Polyacrylamide | 0.5 |
| Example 16 | 1-12 | - | - | 20 | Boehmite | 79.5 | Polyacrylamide | 0.5 |
| Example 17 | 1-13 | - | - | 20 | Boehmite | 79.5 | Polyacrylamide | 0.5 |
| Example 18 | 1-14 | - | - | 20 | Boehmite | 79.5 | Polyacrylamide | 0.5 |
| Example 19 | 1-15 | - | - | 20 | Boehmite | 79.5 | Polyacrylamide | 0.5 |
| Example 20 | 1-16 | | | 20 | Boehmite | 79.5 | Polyacrylamide | 0.5 |
| Example 21 | 1-17 | - | - | 20 | Boehmite | 79.5 | Polyacrylamide | 0.5 |
| Example 22 | 1-18 | - | - | 20 | Boehmite | 79.5 | Polyacrylamide | 0.5 |
| Example 23 | 1-19 | - | - | 20 | Boehmite | 79.5 | Polyacrylamide | 0.5 |
| Example 24 | 1-20 | - | - | 20 | Boehmite | 79.5 | Polyacrylamide | 0.5 |
| Example 25 | 1-20 | 2-1 | 3:1 | 20 | Boehmite | 79.5 | Polyacrylamide | 0.5 |
| Example 26 | 1-20 | 2-2 | 2:1 | 20 | Boehmite | 79.5 | Polyacrylamide | 0.5 |
| Example 27 | 1-20 | 2-3 | 1:1 | 20 | Boehmite | 79.5 | Polyacrylamide | 0.5 |
| Example 28 | 1-20 | 2-4 | 1:2 | 20 | Boehmite | 79.5 | Polyacrylamide | 0.5 |
| Example 29 | 1-20 | 2-5 | 1:3 | 20 | Boehmite | 79.5 | Polyacrylamide | 0.5 |
| Example 30 | 1-20 | 2-6 | 1:9 | 20 | Boehmite | 79.5 | Polyacrylamide | 0.5 |
| Example 31 | 1-20 | 2-6 | 1:4 | 20 | Boehmite | 79.5 | Polyacrylamide | 0.5 |
| Example 32 | 1-20 | 2-6 | 1:2 | 20 | Boehmite | 79.5 | Polyacrylamide | 0.5 |
| Example 33 | 1-20 | 2-6 | 4:1 | 20 | Boehmite | 79.5 | Polyacrylamide | 0.5 |
| Example 34 | 1-20 | 2-6 | 9:1 | 20 | Boehmite | 79.5 | Polyacrylamide | 0.5 |
| Example 35 | 1-20 | 2-7 | 9:1 | 20 | Boehmite | 79.5 | Polyacrylamide | 0.5 |
| Example 36 | 1-20 | 2-7 | 1:4 | 20 | Boehmite | 79.5 | Polyacrylamide | 0.5 |

| | | | | | | | | |
|---|---|---|---|---|---|---|---|---|
| In the table, "-" indicates no addition. | | | | | | | | |

### Comparative Example 1

In the preparation of the coating paste of (1) of Example 1, boehmite (purchased from Zhejiang Jidun New Material Technology Co., Ltd., Dv50 1.3 um) and a binder PVDF (purchased from Solvay Chemical, model number HSV900) were dispersed into a solvent NMP to prepare an insulating coating paste having an NMP content of 88 wt% and a solid content (including boehmite + binder) of 12 wt%. In addition to this, pole pieces were prepared in the same manner as in Example 1 to prepare a battery.

### Comparative Example 2

In the preparation of the coating paste of (1) of Example 1, polyacrylic acid was merely used as a binder. In addition to this, pole pieces were prepared in the same manner as in Example 1 to prepare a battery.

### Comparative example 3

In the preparation of the coating paste of (1) of Example 1, hydroxyethyl polyacrylate was merely used as a binder. In addition to this, pole pieces were prepared in the same manner as in Example 1 to prepare a battery.

The positive pole pieces and batteries obtained in the above examples and comparative examples were tested as follows.

### Pole piece coating detection

The aqueous coating (insulating layer) of the positive pole piece in the above examples was analyzed according to the standard GB/T6040-2002 infrared spectrum analysis method. The specific method is as follows:

The first polymers 1-1 to 1-20 were respectively used as samples to be tested, and were placed in an IS 10 Fourier-transform infrared spectrometer (manufactured by nicolet, USA) for analyzing.

In addition, the batteries obtained in the examples were disassembled to obtain a current collector containing the aqueous coating layer (insulating layer), and the obtained current collector was soaked in an electrolyte solvent diethyl carbonate (DEC) for 2 h, and then the pole pieces were washed with fresh DEC for 3 times, and then dried to serve as the samples to be tested. Then, these samples to be tested were respectively placed into an IS10 Fourier-transform infrared spectrometer from nicolet, USA, and analyzed.

The infrared spectra of the first polymers 1-1 to 1-20 were respectively compared with the infrared spectra of the examples. In the infrared spectra of the examples, the peak positions of carbonyl and carbon-oxygen single bond were both significantly red-shifted, demonstrating that hydrogen bonds were formed in the aqueous coatings of the examples.

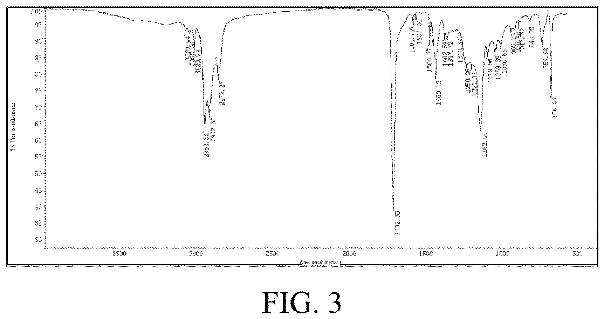

Specifically, FIG. 2 is an infrared spectrum obtained by performing an infrared test on the first polymer 1-20. FIG. 3 is an infrared spectrum obtained by performing an infrared test on an aqueous coating of a positive pole piece after disassembling the battery prepared in Example 24. As can be seen from the comparison between FIG. 2 and FIG. 3, the peak positions of the carbonyl and the carbon-oxygen single bond are significantly red-shifted (1700.17 cm ⁻¹ → 1732.33 cm ⁻¹ and 1073.69 cm ⁻¹ → 1162.46 cm ⁻¹⁾, which indicates that hydrogen bonds are formed in the aqueous coating of Example 24 and there exists a crosslinked three-dimensional network structure.

### Performance tests of the pole pieces

### Performance test on immersion into an electrolyte solution

The pole pieces to be tested were taken and had a good appearance. The test sample having a width of 10 mm and a length of 100 mm was cut off with a blade, and was completely immersed into an electrolyte solvent compounded from EC\DMC\DEC at a compounding ratio of 1:1:1, and immersed at 60°C for 24 h to observe whether the coating peeled off.

### (Peel strength test)

The aqueous coating was subjected to 180° peel strength tests using a tensile tester based on the national standard GB/T 41511-2022.

The pole pieces to be tested were taken and had a good appearance. An pole piece test sample with a width of 10 mm and a length of 100 to 160 mm was cut off with a blade. A special double-sided adhesive tape NITTO. NO5000NS was attached to a steel plate, and the tape had a width of 10 mm and a length of 90 to 150 mm. The above intercepted pole piece test sample with a fixed size was attached onto the double-sided tape, with the test surface facing downward, and then the double-sided tape was rolled three times with a 3 kg roller along the same direction as the surface of the insulating coating of the positive pole piece. A paper strip having a width equal to the width of the pole piece and a length greater than the length of the test sample by 80-200 mm was inserted below the pole piece and fixed with a crepe glue. Then the sample was fixed on a tester; the end of the steel plate not attached with the pole piece was fixed with a lower clamp, the paper tape was folded upward and fixed with an upper clamp; the axial direction of the pole piece was kept consistent with the force application direction. The tester was loaded at a peeling speed of 10 mm/min until the positive pole piece was broken, the test was stopped. The maximum load force was denoted as F (unit: N), the width of the pole piece was L = 20 mm; the peel strength f1 (unit: N/m) was calculated according to f1 = F/L; and the larger the peel strength, the higher the adhesion.

### (Water resistance test)

The pole pieces to be tested were taken and had a good appearance. A test sample of the pole piece having a width of 10 mm and a length of 100 mm was cut out with a blade, and was completely immersed in a water-containing ultrasonic meter (model: BRANSON CPX 3800 H-C, the ultrasonic frequency: 20 KHZ, the ultrasonic power: 50 W), and a stopwatch was turned on synchronously to record the dissolving and peeling time of the aqueous coating.

### (Contact angle test)

Referring to the GB/T 30693-2014 standard document, the contact angle of the aqueous coating (insulating layer) with water was tested, and deionized water was adopted as a liquid reagent.

Specifically, the current collector containing the aqueous coating to be tested was placed on a test object stage, 0.6 µL to 1.0 µL of deionized water was then pressed out by a microsyringe. A rotary knob at the base of the stage was rotated to move the stage until it contacted the deionized water droplet; and the image was frozen within 10 s, and the included angle between the tangent line of the outer surface of the droplet and the plane of the aqueous coating was measured out as the contact angle using an angle gauging method.

### Battery performance test

### (Test on the battery capacity retention rate)

The test process of the capacity retention rate of the battery is as follows: at 25°C, the battery in each example was charged at a constant current of 1/3 C to 3.65 V, then charged at a constant voltage of 3.65 V to a current of 0.05 C, and left for 5 min, and then discharged at 1/3 C to 2.7 V, and the obtained capacity was denoted as the initial capacity C0. The above steps were repeated for the same battery, and the discharge capacity Cn of the battery after the nth cycle was denoted at the same time, then the battery capacity retention rate after each cycle is Pn = Cn/C0 * 100%. In this test procedure, the first cycle corresponds to n = 1, the second cycle corresponds to n = 2, ..., and the 100th cycle corresponds to n = 100.

In the present application, the batteries in the examples were cycled 800 times under the above test conditions, and the capacity retention rate was calculated and shown in Table 4.

### (Battery vibration abuse test)

In the process of winding the battery assembly, the aqueous coating (insulating coating) was partially folded at the innermost side of the battery assembly by about 2 mm to be inserted into the active region of the negative pole piece, and the battery was obtained by the same method as the above "preparation of a lithium-ion battery".

The obtained battery was placed on a vibration table for vibration tests in three directions of X/Y/Z for 8 h, respectively, and then the battery assembly was disassembled to confirm whether there was ablation at the fold of the pole piece. If there is ablation, it indicates that a short circuit occurs inside the battery, and the safety performance is poor. If there is no ablation, it indicates that the battery has good safety performance.

The test results of the above Examples and Comparative Examples are shown in Table 4 below.

**Table 4**

| No. | Positive pole piece | | | | battery | |
|---|---|---|---|---|---|---|
| | Condition after being immersed into the electrolyte solution | Peel strength (N/m) | Water resistance (s) | Contact angle with water (°) | Capacity retention rate (%) | Vibration abuse test |
| Example 1 | Non-Falling | 10.9 | 11 | 42.788 | 78.4 | Ablation free |
| Example 2 | Non-Falling | 11.2 | 12 | 40.333 | 78.5 | Ablation free |
| Example 3 | Non-Falling | 11.8 | 16 | 39.474 | 79.9 | Ablation free |
| Example 4 | Non-Falling | 11.2 | 14 | 45.389 | 79.5 | Ablation free |
| Example 5 | Non-Falling | 10.5 | 11 | 51.234 | 78.1 | Ablation free |
| Example 6 | Non-Falling | 11.2 | 12 | 50.789 | 77.4 | Ablation free |
| Example 7 | Non-Falling | 12.4 | 17 | 70.789 | 80.1 | Ablation free |
| Example 8 | Non-Falling | 11.1 | 13 | 78.454 | 78.2 | Ablation free |
| Example 9 | Non-Falling | 11.9 | 15 | 37.676 | 79.4 | Ablation free |
| Example 10 | Non-Falling | 11.0 | 14 | 45.343 | 78.7 | Ablation free |
| Example 11 | Non-Falling | 13.5 | 21 | 51.121 | 81.5 | Ablation free |
| Example 12 | Non-Falling | 14.0 | 24 | 32.788 | 81.8 | Ablation free |
| Example 13 | Non-Falling | 13.1 | 19 | 34.000 | 81.2 | Ablation free |
| Example 14 | Non-Falling | 12.4 | 23 | 34.274 | 80.9 | Ablation free |
| Example 15 | Non-Falling | 14.6 | 26 | 38.156 | 82.0 | Ablation free |
| Example 16 | Non-Falling | 14.4 | 27 | 39.127 | 82.4 | Ablation free |
| Example 17 | Non-Falling | 13.5 | 29 | 42.178 | 81.6 | Ablation free |
| Example 18 | Non-Falling | 14.0 | 29 | 56.424 | 81.7 | Ablation free |
| Example 19 | Non-Falling | 14.3 | 30 | 82.172 | 82.4 | Ablation free |
| Example 20 | Non-Falling | 14.7 | 31 | 49.845 | 82.1 | Ablation free |
| Example 21 | Non-Falling | 14.7 | 32 | 55.182 | 82.5 | Ablation free |
| Example 22 | Non-Falling | 15.0 | 33 | 51.324 | 83.3 | Ablation free |
| Example 23 | Non-Falling | 15.2 | 32 | 58.458 | 83.8 | Ablation free |
| Example 24 | Non-Falling | 15.6 | 33 | 50.020 | 87.4 | Ablation free |
| Example 25 | Non-Falling | 17.9 | 34 | 59.787 | 90.5 | Ablation free |
| Example 26 | Non-Falling | 17.7 | 35 | 45.444 | 90.6 | Ablation free |
| Example 27 | Non-Falling | 17.9 | 38 | 57.432 | 90.2 | Ablation free |
| Example 28 | Non-Falling | 20.6 | 41 | 49.878 | 92.2 | Ablation free |
| Example 29 | Non-Falling | 20.4 | 39 | 51.240 | 91.5 | Ablation free |
| Example 30 | Non-Falling | 20.9 | 46 | 40.018 | 93.7 | Ablation free |
| Example 31 | Non-Falling | 22.7 | 48 | 51.423 | 94.7 | Ablation free |
| Example 32 | Non-Falling | 23.8 | 52 | 45.444 | 95.2 | Ablation free |
| Example 33 | Non-Falling | 22.4 | 45 | 40.389 | 94.7 | Ablation free |
| Example 34 | Non-Falling | 21.7 | 45 | 46.222 | 93.5 | Ablation free |
| Example 35 | Non-Falling | 21.0 | 45 | 42.898 | 93.0 | Ablation free |
| Example 36 | Non-Falling | 22.0 | 47 | 44.555 | 93.9 | Ablation free |
| Comparative Example 1 | Falling | 0.3 | 50 | 92.147 | 72.1 | Local ablation |
| Comparative Example 2 | Non-Falling | 7.4 | 3 | 32.312 | 75.0 | Ablation |
| Comparative example 3 | Non-Falling | 5.1 | 9 | 80.500 | 73.6 | Local ablation |

As shown in the data in Table 4, the aqueous coatings of the positive pole pieces in Examples 1-36 of the present application have high adhesion and high water resistance. Specifically, the after soaking of the positive pole piece in the electrolyte solution, the aqueous coatings are falling free; and the peel strength of the aqueous coatings is all greater than 8 N/m, indicating a high adhesion. In the water resistance test, the coatings fell off after a long time, and the water resistance and solubility are good. In addition, the contact angle of aqueous coating with water is less than 90°, indicating that the wettability of the aqueous coating is good, which is beneficial to improve the adhesion of the aqueous coating to the surface of the substrate. In addition, the aqueous batteries containing the aqueous coatings in Examples 1 to 36 have high capacity retention rates after 800 cycles and excellent cycle performance. Moreover, no ablation is found in the vibration abuse test of the batteries, and the safety performance of the batteries is good.

Among the examples, compared with Examples 1 to 21, Examples 25 to 36 further contain the second polymer as an aqueous binder. The first polymer and the second polymer form hydrogen bonds and/or a crosslinked structure, thus forming a crosslinked high-density three-dimensional network structure. The adhesion and water resistance of the coatings were further improved, thereby improving the cycle performance and safety of the batteries.

In examples 30-36, the structural unit of formula 2 in the first polymer and the structural unit of formula (6) in the second polymer both include a specific structure (hydroxypropyl ester), which thereby greatly improves the adhesion and water resistance of the aqueous coatings, and enhancing the cycle performance and safety of the batteries.

In contrast, in Comparative Examples 1 to 3, the coatings may not achieve both high adhesion and high water resistance; and the cycle performance of the battery is poor to affect the safety of the battery. Specifically, in Comparative Example 1, the oil-based coating paste(a binder PVDF + a solvent NMP) was used in the aqueous pole piece. Although the oil-based coating exhibits high water resistance in the water resistance test, due to its incompatibility with the aqueous pole piece, the coating falls off, the adhesion is very poor, the cycle performance is poor, local ablation occurs, and the battery safety is poor. In Comparative Example 2, only polyacrylic acid is used as the binder; and only hydroxyethyl polyacrylate is used as the binder in Comparative Example 3. Since the crosslinked three-dimensional network structure is not formed in the coatings, the aqueous coatings may not obtain sufficient adhesion and water resistance, resulting in poor cycle performance and safety performance of the battery.

It should be noted that the present application is not limited to the above-described implementation. The above-described implementation is merely an example, and any implementation having substantially the same configuration as the technical concept and exhibiting the same operation and effect within the scope of the claims of the present application is included in the technical scope of the present application. In addition, various modifications that can be conceived by those skilled in the art may be made to the embodiments without departing from the subject matter of the present application, and other embodiments constructed by combining some of the constituent elements in the embodiments are also included in the scope of the present application.

## Claims

1. An aqueous coating composition, comprising an aqueous binder and a solvent, wherein:
the aqueous binder comprises a first polymer comprising a structural unit represented by formula (1) and a structural unit represented by formula (2): 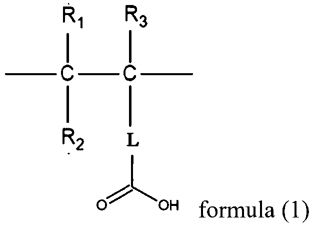
in the formula (1), R₁, R₂ and R₃ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and L is a connecting bond or a C1-10 alkylene group; 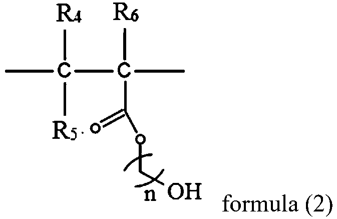
in the formula (2), R₄, R₅ and R₆ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and n = 2 to 12.

2. The aqueous coating composition according to claim 1, wherein
in the formula (1), R₁, R₂ and R₃ are each independently hydrogen, an alkyl, a hydroxyalkyl, an alkoxy, a hydroxyl or a cyano group, and L is a connecting bond or a C3-4 alkylene group;
in the formula (2), R₄, R₅ and R₆ are each independently hydrogen, an alkyl, a hydroxyalkyl, an alkoxy, a hydroxyl or a cyano group, and n = 3 to 6.

3. The aqueous coating composition according to claim 1 or 2, wherein
in the first polymer, a mass ratio of the structural unit represented by the formula (1) is 10% to 75%, and a mass ratio of the structural unit represented by the formula (2) is 5% to 40%.

4. The aqueous coating composition according to any one of claims 1 to 3, wherein
the first polymer further comprises a structural unit represented by formula (3) and/or a structural unit represented by formula (4): 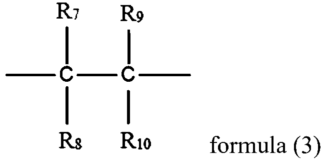
in the formula (3), R₇, R₈ and R₉ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano froup or a nitro group;
R₁₀ is a rigid group, optionally a cyano group, an amido or an aryl, and optionally a cyano group, 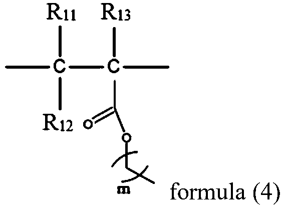
in the formula (4), R₁₁, R₁₂ and R₁₃ are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and m = 2 to 12.

5. The aqueous coating composition according to claim 4, wherein
in the first polymer, a mass ratio of the structural unit represented by formula (3) is 5% to 40%.

6. The aqueous coating composition according to claim 4, wherein
in the first polymer, a mass ratio of the structural unit represented by formula (4) is 10% to 75%.

7. The aqueous coating composition according to any one of claims 4 to 6, wherein
in the first polymer, the mass ratio of the structural unit represented by formula (1) is 30% to 55%, the mass ratio of the structural unit represented by formula (2) is 5% to 15%, the mass ratio of the structural unit represented by formula (3) is 10% to 20%, and the mass ratio of the structural unit represented by formula (4) is 30% to 55%.

8. The aqueous coating composition according to any one of claims 1 to 7, wherein
the first polymer has a number-average molecular weight of 200,000 to 1,000,000, and optionally 300,000 to 600,000.

9. The aqueous coating composition according to any one of claims 1 to 8, wherein
the aqueous binder further comprises a second polymer different from the first polymer and comprising a group capable of reacting with the first polymer, and
the group is capable of forming a hydrogen bond and/or a crosslinked structure with the first polymer.

10. The aqueous coating composition according to claim 9, wherein
the second polymer comprises a flexible group, and
optionally, the flexible group is a group comprising an ester bond or a group comprising an ether bond.

11. The aqueous coating composition according to claim 9 or 10, wherein
the second polymer comprises a structural unit represented by formula (5), a structural unit represented by formula (6), and a structural unit represented by formula (7): 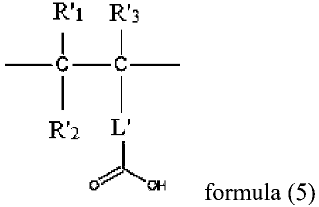
in the formula (5), R'₁, R'₂, and R'₃ are the same as or different from R₁, R₂ and R₃, respectively, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, and L' is the same as or different from L and is a connecting bond or a C1-10 alkylene group; 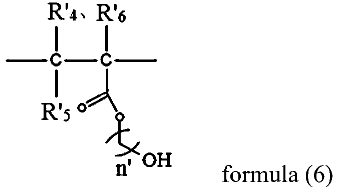
in the formula (6), R'₄, R'₅, and R'₆ are the same as or different from R ₄, R₅ and R₆, respectively, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group or a nitro group, n' is the same as or different from n, and n' = 2 to 12, 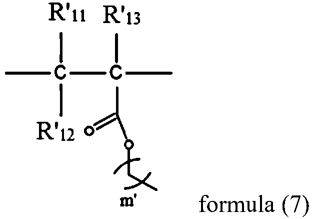
in the formula (7), R'₁₁, R'₁₂, and R'₁₃ are the same as or different from R₁₁, R₁₂, and R₁₃, and are each independently hydrogen, a halogen, an alkyl, a hydroxyalkyl, an alkoxy, a cycloalkyl, an alkenyl, an alkynyl, a heterocycloalkyl, an aryl, a heteroaryl, a hydroxyl, a cyano group, or a nitro group, m' is the same as or different from m, and m' = 2 to 12.

12. The aqueous coating composition according to claim 11, wherein
in the formula (5), R'₁, R'₂, and R'₃ are each independently hydrogen, an alkyl, a hydroxyalkyl, an alkoxy, a hydroxyl, or a cyano group, and L' is a connecting bond or a C3-4 alkylene group;
in the formula (6), R'₄, R'₅, and R'₆ are each independently hydrogen, an alkyl, a hydroxyalkyl, an alkoxy, a hydroxyl, or a cyano group, and n' = 3 to 6;
in the formula (7), R'₁₁, R'₁₂, and R'₁₃ are each independently hydrogen, an alkyl, a hydroxyalkyl, an alkoxy, a hydroxyl or a cyano group, and m' = 3 to 6.

13. The aqueous coating composition according to claim 11 or 12, wherein
in the second polymer, a mass ratio of the structural unit represented by formula (5) is 10% to 60%, a mass ratio of the structural unit represented by formula (6) is 5% to 20%, and a mass ratio of the structural unit represented by formula (7) is 20% to 60%.

14. The aqueous coating composition according to any one of claims 11 to 13, wherein
the structural unit of the formula (2) is 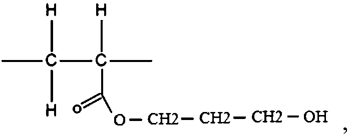 and
the structural unit of the formula (6) is

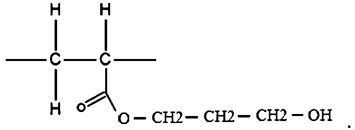

15. The aqueous coating composition according to any one of claims 9 to 14, wherein
the second polymer has a number-average molecular weight of 200,000 to 1,200,000, and optionally 250,000 to 600,000.

16. The aqueous coating composition according to any one of claims 9 to 15, wherein
the mass ratio of the first polymer to the second polymer is 9:1 to 1: 9, and optionally 4:1 to 1:4.

17. The aqueous coating composition according to any one of claims 1 to 16, wherein
the solvent is water.

18. The aqueous coating composition according to any one of claims 1 to 17, wherein
the composition further comprises an insulating material and/or a dispersant,
optionally, the insulating material is a ceramic material, and optionally, the ceramic material is a boehmite powder; and
optionally, the dispersant is a polyacrylamide dispersant.

19. An aqueous pole piece comprising: an aqueous coating, wherein
the aqueous coating is formed from the aqueous coating composition according to any one of claims 1 to 18, and has a crosslinked three-dimensional network structure.

20. The aqueous pole piece according to claim 19, wherein
the aqueous coating comprises an aqueous binder in an amount of 10%-30% by mass, and optionally 15%-25% by mass, with respect to a total mass of the aqueous coating.

21. The aqueous pole piece according to claim 19 or 20, wherein
the aqueous coating comprises an insulating material in an amount of 65%-80% by mass with respect to the total mass of the aqueous coating, and a dispersant in an amount of 0.2%-1.0% by mass with respect to the total mass of the aqueous coating.

22. The aqueous pole piece according to any one of claims 19 to 21, wherein
a contact angle of the aqueous coating with water is less than or equal to 90°, and optionally 40° to 80°.

23. The aqueous pole piece according to any one of claims 19 to 22, wherein
the aqueous coating in the aqueous pole piece has a peel strength of greater than or equal to 10 N/m, and optionally greater than or equal to 17 N/m, and
the peel strength is obtained by a peel test based on a national standard GB/T 41511-2022.

24. The aqueous pole piece according to any one of claims 19 to 23, wherein
the aqueous pole piece is an aqueous positive pole piece or an aqueous negative pole piece.

25. An aqueous battery, comprising the aqueous pole piece according to any one of claims 19 to 24.

26. An electric device, comprising the aqueous battery according to claim 25.
